**Europäisches Patentamt**

**European Patent Office**

(19)

**Office européen des brevets**

(11) Veröffentlichungsnummer : **0 348 751 B1**

(12) **EUROPÄISCHE PATENTSCHRIFT**

(45) Veröffentlichungstag der Patentschrift :
**02.01.92 Patentblatt 92/01**

(51) Int. Cl.⁵ : **A01M 5/08**

(21) Anmeldenummer : **89110925.8**

(22) Anmeldetag : **16.06.89**

(54) **Verfahren zum Entfernen von Kartoffelkäfern.**

(30) Priorität : **25.06.88 DE 3821565**

(43) Veröffentlichungstag der Anmeldung :
**03.01.90 Patentblatt 90/01**

(45) Bekanntmachung des Hinweises auf die
Patenterteilung :
**02.01.92 Patentblatt 92/01**

(84) Benannte Vertragsstaaten :
**AT CH DE FR IT LI NL**

(56) Entgegenhaltungen :
**DE-C- 8 942**
**DE-C- 908 929**
**DE-C- 934 616**
**FR-A- 883 725**
**US-A- 2 722 082**
**SOVIET INVENTIONS ILLUSTRATED, Sektion
P, Woche 8038, 29. Oktober 1980, Klass P14,
Nr. J2433C/38, Derwent Publications Ltd, London, GB; & SU-A-715 076 (I.S. TERESHONOKI)
25-02-1980
IDEM**

(56) Entgegenhaltungen :
**SOVIET INVENTIONS ILLUSTRATED, Sektion
P, Woche 8846, 4. Januar 1989, Klass P14, Nr.
88-329162/46, Derwent Publications Ltd, London, GB; & SU-A-1395 249 (ROST COMMU-
NUAL SERV) 15-05-1988
SOVIET INVENTIONS ILLUSTRATED, Sektion
P, Woche 8735, 9. September 1987, Klass P14,
Nr. 87-248833/35, Derwent Publications Ltd,
London, GB; & SU-A-1284 483 (N.I. CHERNY-
SCHEV) 23-01-1987
SOVIET INVENTIONS ILLUSTRATED, Sektion
P, Woche 8644, 13. November 1986, Klass P14,
Nr. 86-290385/44, Derwent Publications Ltd,
London, GB; & SU-A-1 217 322 (I.V. BELOU-
SOV) 15-03-1986**

(73) Patentinhaber : **Engelhardt, Fritz**
**Haus Nr. 17**
**W-8431 Hofen (DE)**

(72) Erfinder : **Engelhardt, Fritz**
**Haus Nr. 17**
**W-8431 Hofen (DE)**

(74) Vertreter : **Göbel, Matthias, Dipl.-Ing.**
**Pruppacher Hauptstrasse 5-7**
**W-8501 Pyrbaum-Pruppach (DE)**

**EP 0 348 751 B1**

## Beschreibung

Die Erfindung betrifft eine Vorrichtung zum Entfernen von Kartoffelkäfern von Kartoffelpflanzen mit mehreren in einem durch eine landwirtschaftliche Zugmaschine getragenem Gestell angeordneten und an der Druckseite eines Gebläses angeschlossenen Druckluftleitungen beziehungsweise Druckluftkanälen, die seitlich neben den Kartoffelpflanzen quer zur Falertrichtung ausblasende Öffnungen (Düsen) aufweisen und bei der jeder Druckluftleitung auf der jeweils anderen Seite der Kartoffelpflanzen nach unten versetzt eine mit ihrer Längsachse in Fahrrichtung der Zugmaschine weisende Auffangwanne für Kartoffelkäfer zugeordnet ist, die über eine Saugluftleitung beziehungsweise über einen Sangluftkanal mit einem an der Saugseite des Gebläses anliegenden Fangkorb verbunden ist.

Bei einer bekannten Vorrichtung zum Entfernen von Kartoffelkäfern von Kartoffelpflanzen (SU-A-715-076) sind die Kartoffelkäfer durch eine aus Rohrleitungen austretende Druckluftströmung von den Kartoffelpflanzen abblasbar und in eine Auffangwanne transportierbar. Während die Druckluftströmung bei dieser Vorrichtung aus der Auffangwanne über Rohre frei abfließt, bereitet der Verbleib der Kartoffelkäfer in der nach oben offenen Auffangwanne Schwierigkeiten, wodurch der Wirkungsgrad dieser Vorrichtung nur gering ist und die Vorrichtung nicht sicher arbeitet. Bei einer weiterhin bekannten Vorrichtung dieser Art (SU-A-1217-322) gemäß den Oberbegriffen der Ansprüche 1 und 6 ist der Entfernungseffekt zwar durch die Anordnung von mit den Auffangwannen durch Rohrleitungen verbundenen Sammelbehältern verbessert, jedoch führen die zu beiden Seiten der Kartoffelpflanzenreihe mit ihren Luftaustritten einander gegenüberliegenden Druckluftleitungen zu störenden Luftverwirbelungen. Außerdem ist mit dieser Vorrichtung nur jeweils eine Pflanzenreihe bearbeitbar.

Es ist Aufgabe der Erfindung Maßnahmen zum schnellen und sicheren Entfernen von Kartoffelkäfern von Kartoffelpflanzen zu schaffen.

Erfindungsgemäß ist hierzu vorgesehen, daß zwei Druckluftleitungspaare nebeneinander mit in Fahrrichtung der Zugmaschine im Abstand versetzten Druckluftleitungen im Gestell angeordnet sind und die Ausblasöffnungen der Druckluftleitungen eines jeden Druckluftleitungs paares quer zueinander und zur Fahrrichtung gerichtet in Abstand versetzt augebildet sind. Abgesehen davon, daß die Druckluftleitungspaare mehrere Reihen Kartoffelpflanzen gleichzeitig zu bearbeiten erlauben, besteht durch die Versetzung der den Druckluftleitungspaaren zuzurechnenden Ausblasöffnungen die Möglichkeit, die Kartoffelpflanzen beidseitig gleichzeitig mit Druckluftströmungen zu beaufschlagen, ohne daß sich die Druckluftströmungen gegenseitig behindern bzw. die Überführung der Kartoffelkäfer in die Auffagnwannen nachteilig beeinflußt wird. Es versteht sich, daß jedes der Druckluftleitungen einzeln an die Druckseite eines Gebläses angeschlossen sein kann. Zweckmäßig liegen jedoch die Druckluftleitungen über Abzweigungen gemeinsam an ein mit dem Austrittsstutzen eines Gebläses verbundenes Rohr an.

Zur Vermeidung von Transportverlusten an Kartoffelkäfern ist vorgesehen, vor und hinter jeder Druckluftleitung bzw. den Druckluftleitungspaaren als Prallflächen für Luft und Kartoffelkäfer dienende Vorhänge oder Vorhangabschnitte aus flexiblem Werkstoff auszubilden, die mit einem Ende an einem oben geschlossenen, im Querschnitt, z.B. u-förmigen Blechformteil frei angehängt sind. Etwaige in Bewegungsrichtung der Vorrichtung abgeschleuderte Kartoffelkäfer treffen auf die Vorhänge und werden von diesen an die Auffangwannen zurückgeworfen. Weiter können die Druckluftleitungspaare voneinander durch einen am Gestell angeordneten Plattenwandteil voneinander getrennt und durch weitere Plattenwandteile im Abstand außen begrenzt sein.

Schließlich hat sich als zweckmäßig erwiesen, wenn die Auffangwannen über einen wesentlichen Teilabschnitt durch ein abgewinkeltes Deckblech im Abstand übergriffen sind, an dem sich nach oben jeweils die vorerwähnten Plattenwandteile anschließen. Die Deckbleche bilden mit den Auffangwannen Einführungschlitze für die Kartoffelkäfer und der Gebläseluft und verhindern gleichzeitig ein unerwünschtes Entweichen von Kartoffelkäfern nach oben. Gegebenenfalls an den Längsrandkanten der Auffangwannen angeordnete, nach oben weisende Randstreifen aus einem flexiblen oder federnd elastischen Werkstoff unterstützen die Überführung der Kartoffelkäfer in die Auffangwannen. Außerdem wirken sich die elastischen Streifen schonend auf die Kartoffelpflanzen beim Vorbeiführen der Vorrichtung an diesen aus.

Es versteht sich, daß die Vorrichtung in der Höhe unverstellbar ausgebildet sein kann. Zweckmäßig sind jedoch die Druckluftleitungen der jeweiligen Pflanzengröße und Pflanzenhöhe durch Anheben oder Absenken des Gestells verstellbar anpaßbar. An den Auffangwannen können nach weiterer Ausbildung biegsame Saugluftleitungen anliegen, die mit einer gemeinsamen Abluftleitung in Verbindung stehen, das in die untere Kammer des Fangkorbs ausmündet. Es versteht sich, daß der Fangkorb, beliebig, beispielweise als einstückiger kastenförmiger Behälter ausgeführt sein kann. Nach bevorzugter Ausführung ist jedoch vorgesehen, den Fangkorb durch zwei übereinander angeordnete Kammern zu bilden, die durch eine gelochte Trennwand miteinander in Verbindung stehen. Die obere Kammer kann mit dem Gebläse fest verbunden sein, über eine Seitenwandöffnung an der Saugseite des Gebläses anliegen und die untere Kammer ausziehbar tragen sowie durch ein unterhalb der Lochwand in die untere Kammer ausmündende Abflußleitung für die Saugluftströmung durchgriffen sein. Der Fangkorb kann aus beliebigen Materialien, z.B. einem metallischen Werstoff oder aus Holz oder Kunststoff gefertigt sein.

In Abwandlung der Vorrichtung ist die Anordnung einer Anzahl jeweils paarweise im Abstand nebeneinander an einem Traggestell ausgebildeten, zur Auffangwanne hin permanent offenen Saugluftkanälen und im Abstand hinter diesen angeordneten, mit seitlichen Ausblasöffnungen versehenen Druckluftkanälen sowie je ein einen Saugluftkanal und zugehörigen Druckluftkanal verbindendes unabhängiges Druckluftgebläse vorgesehen wobei die Ausblasöffnungen der paarweise einander zugeordneten Druckluftkanälen quer zueinander und zur Fahrtrichtung im Abstand versetzt angeordnet sind. Die Saugluftkanäle und Druckluftkanäle können dabei einfach durch Formteile gebildet sein, die gemeinsam mit den Druckluftgebläsen Baueinheiten bilden, die zweckmäßig unten als obere Abdeckung für die Auffangwannen dienende, von der Mitte ausgehend zu beiden Seiten schräg von oben nach unten außen sich erstreckende Wandflächen aufweisen und bei denen zwischen den freien Randkanten von Wandflächen und Auffangwannen Schlitze für den Durchwurf der Kartoffelkäfer und für den Durchtritt von Gebläsezuluft ausgebildet sind. Die so gebildete Vorrichtung ist aus wenigen Teilen aufrichtbar und einfach herzustellen. Die die Saugluftkanäle und die Druckluftkanäle bildenden Formteile können, z.B. aus einen geeigneten Kunststoff ausgeformt sein. Es versteht sich, daß auch andere geeignete Werkstoffe, z.B. metallische Werkstoffe für die Herstellung der Formteile zum Einsatz bringbar sind. Bevorzugt können die Formteile durch in der gemeinsamen Längsmittelebene lösbar fest zusammengefügte Formteilhälften gebildet sein. Zweckmäßig sind die Formteilhälften durch Klemmmittel, z.B. schrauben, Nieten od.dgl. aneinander fest gehalten.

Außerdem ist noch vorgesehen, daß die Zuströmöffnungen der Saugluftkanäle mit den Auffangwannen in Verbindung stehen und daß die Zuströmöffnungen an dem den Auffangwannen zugewandten Ende durch als Sperrglieder für die Kartoffelkäfer dienende Gitter übergriffen sind. Auf diese Weise kann Zuluft aus den Auffangwannen in die Saugluftkanäle ungehindert übertreten, ohne daß dabei Kartoffelkäfer durch die Zuluft mitgenommen und über das Gebläse erneut auf die Kartoffelpflanzen gelangen. Es versteht sich, daß die mit den Druckluftkanälen in Verbindung stehenden Ausblasöffnungen durch hinsichtlich Menge, Ausblasrichtung oder Luftstrahlform unveränderbar fest ausgebildete Ausblasdüsen gebildet sein können. Gemäß bevorzugter Ausführung sind jedoch die Ausblasöffnungen als einstellbare bzw. veränderbare Ausblasdüsen gestaltet, wodurch eine Anpassung der Vorrichtung an die Größe der Kartoffelpflanzen und deren Besatz an Kartoffelkäfern möglich ist.

Schließlich sieht die Erfindung noch vor, daß die Druckluftgebläse durch Hydraulikmotoren drehbare Gebläseräder aufweisen und daß die Zufluß- bzw. Abflußleitungen für das Antriebsmedium der Hydraulikmotoren über einen Verteiler bzw. einen Sammler an einem gemeinsamen Zweiwegeventil anliegen, das über einen Druckregler mit der Druckseite einer Pumpe und vermittels einer Abflußleitung mit dem Öltank in Verbindung steht. Am Verteiler bzw. Sammler können eine beliebige Anzahl Zufluß- bzw. Abflußleitungen anliegen, so daß mit geringem Bauaufwand eine beliebige Anzahl Vorrichtungen gleichzeitig zum Einsatz gebracht werden können. Die Betätigung des Zweiwegeventils kann von dem, die Vorrichtung tragenden Fahrzeug aus einfach durch Umlegen eines Betätigungshebels erfolgen. Außerdem ist vorgesehen, in den Zuflußleitungen zwischen Verteiler und Hydraulikmotoren Mengenregelventile anzuordnen, die durch mehr oder weniger weites Öffnen eine Drehzahlregelung der Antriebsmotore erlauben.

Die Erfindung ist anhand eines Ausführungsbeispiels in der Zeichnung verdeutlicht. Hierin bedeuten :

Fig. 1 ein Teilstück einer Vorrichtung in Draufsicht,
Fig. 2 eine Teilstück einer Vorrichtung in Vorderansicht,
Fig. 3 einen Teilschnitt einer Vorrichtung,

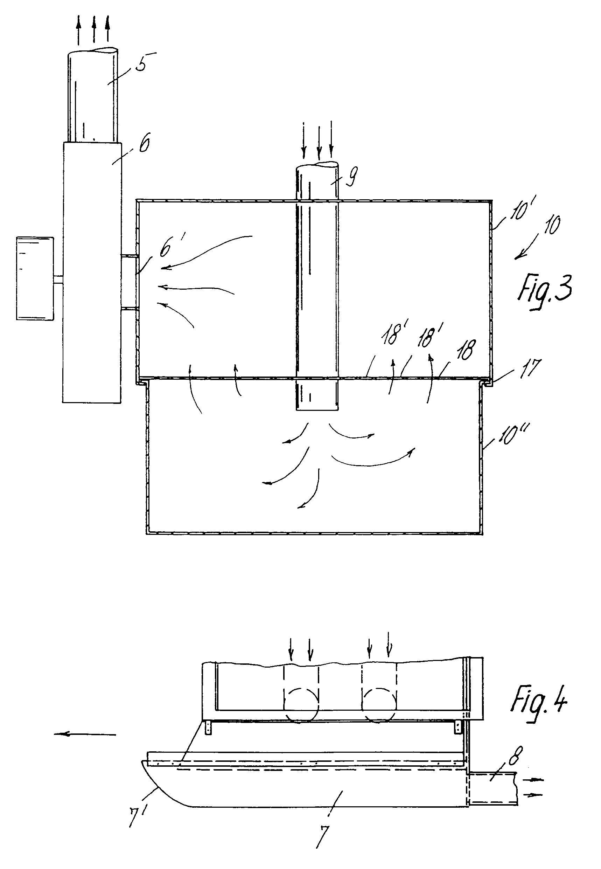

Fig. 4 ein weiteres Teilstück der Vorrichtung in Seitenansicht,
Fig. 5 eine Vorrichtung abgewandelter Ausgestaltung, in Seitenansicht,
Fig. 6 eine Vorrichtung gemäß Fig. 5 in Rückansicht,
Fig. 7 eine Vorrichtung gemäß Fig. 5 in Vorderansicht,
Fig. 8 einen Hydraulikplan für eine Vorrichtung gemäß Fig. 5,
Fig. 9 eine Vorrichtung gemäß Fig. 5 in Draufsicht,
Fig. 10 einen Teilschnitt einer Vorrichtung nach der Linie X-X der Fig. 5, vergrößert und
Fig. 11 eine Vorrichtung, mehrteilig, in Vorderansicht.

In den Fig. sind mit 1 Rahmenteile eines nicht näher dargestellten Gestells bezeichnet. Das Gestell ist, z.B. durch den Frontlader einer landwirtschaftlichen Zugmaschine tragbar. An den Rahmenteilen 1 sind Druckluftleitungen 2 bei 3 festgelegt, die über ein Abzweigstück 4 mit dem Druckluftrohr 5 der Druckseite eines Gebläses 6 in Verbindung stehen. Die Druckluftleitungen 2 sind durch Anheben oder Absenken der Rahmenteile 1 in der Höhe veränderlich. Die Druckluftleitungen 2 weisen rechtwinkelig zur Fahrrichtung abgebogene Austrittsenden 2' auf, wodurch die Druckluftströmung quer zur Fahrrichtung austreten kann.

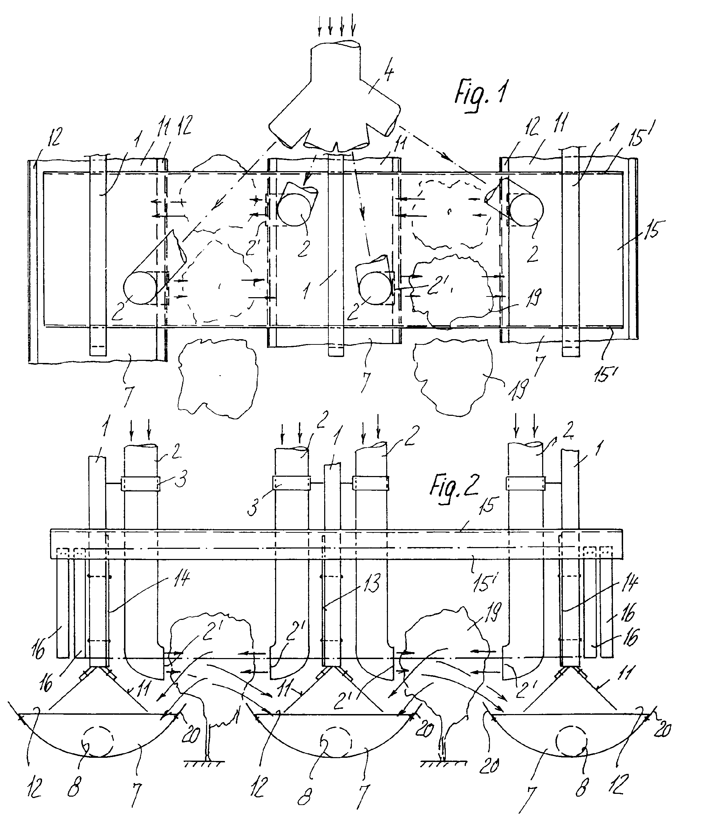

Beim Ausführungsbeispiel der Fig. 1 und 2 sind paarweise ausgebildete Druckluftleitungen 2 vorgesehen, wobei die Druckluftleitungen 2 eines jeden Druckluftleitungspaares in Fahrrichtung im Abstand versetzt sind. Auf der den Pflanzen 19 gegenüberliegenden Seite der Druckluftleitungen 2 sind an den Rahmenteilen 1 Auffangwannen 7 angehängt, die kreisabschnittsförmige Querschnitte aufweisen und an den Enden verschlossen sind. Bevorzugt ist das vordere Ende 7' der Auffangwannen 7 schräg oder bogenförmig in Fahrrichtung und oben ausgeführt, um durch Aufgleiten an Bodenerhebungen eine Beschädigung der Auffangwannen auszuschließen. Mit den Auffangwannen hinten steht jeweils eine Saugluftleitung 8 in Verbindung, die über ein nicht näher dargestelltes Abzweigstück mit einem Rohrstück 9 in Verbindung stehen, das in einen Fangkorb 10 einmündet. Die Auffangwannen 7 sind über Teillängen durch ein abgewinkeltes Deckblech 11 übergriffen, die Schlitze 12 bilden, die den Verbleib von Kartoffelkäfern in den Auffangwannen 7 fördern. Außerdem sind die Druckluftleitungen durch eine Trennwand 13, z.B. ein Blech voneinander getrennt, während außenseitig zu den Druckluftleitungen 2 weitere Trennwände 14 vorgesehen sind, die eine effektive Ausnutzung der tragenden Luftströmung bewirken.

Im Abstand oberhalb der Auffangwannen 7 ist ein im wesentlichen u-förmiges Trägerblech 15 an den Rahmenteilen 1 festgelegt, dessen Schenkel 15' eine Vielzahl Streifen 16 aus einem flexiblen Werkstoff tragen, die gemeinsam einen nachgiebigen Vorhang bilden. Die Streifen 16 wirken auch als Prallfläche für abschleudernde Kartoffelkäfer und leiten diese in Richtung Auffangwannen zurück.

Der Fangkorb 10 ist mit einer oberen Kammer 10' versehen, an die vermittels Schlitzführungen 17 eine untere Kammer 10" anhängbar ist. Die beiden Kammern 10', 10" stehen durch ein Lochblech 18 miteinander in Verbindung. Beim Ausführungsbeispiel ist das mit den Saugluftleitungen in Verbindung stehende Rohrstück 9 durch die obere Kammer 10' hindurch bis in die untere Kammer 10" geleitet. Zum Entfernen der gesammelten Kartoffelkäfer kann die untere Kammer 10" nach vorne von der Kammer 10' abgenommen werden. Mit der Kammer 10' steht die Saugöffnung 6' des Gebläses 6 in Verbindung, das beim Ausführungsbeispiel durch eine Riemenscheibe antreibbar ist.

Zum Verständnis der Funktion der Vorrichtung ist davon auszugehen, daß durch Drehen des Gebläserades (nicht gezeigt) eine Druckluftströmung an die Druckluftleitungen 2 abgegeben wird, die nach Verlassen der Druckluftleitungen 2 auf die Kartoffelpflanzen auftrifft und die auf den Kartoffelpflanzen befindlichen Kartoffelkäfer abhebt und mitnimmt. Die Druckluftströmung überführt die Kartoffelkäfer über die Schlitze 11 in die Auffangwannen 7. Von dort werden die Kartoffelkäfer über Saugluftleitungen 8 und dem Rohrstück 9 in die untere Kammer 10" des Fangkorbs 10 abgegeben. Über das Lochblech 18 kann die Luftströmung aus der unteren Kammer 10" an die obere Kammer 10' übertreten und der Saugseite des Gebläses 22 zugeführt werden. Die Lochungen 18' im Lochblech 18 sind in ihrer Größe so bemessen, daß ein Entweichen von Kartoffelkäfern ausgeschlossen ist. Mit 20 sind flexible Streifen bezeichnet, die an den Längsrandkanten der Auffangwannen 7 festgelegt sind.

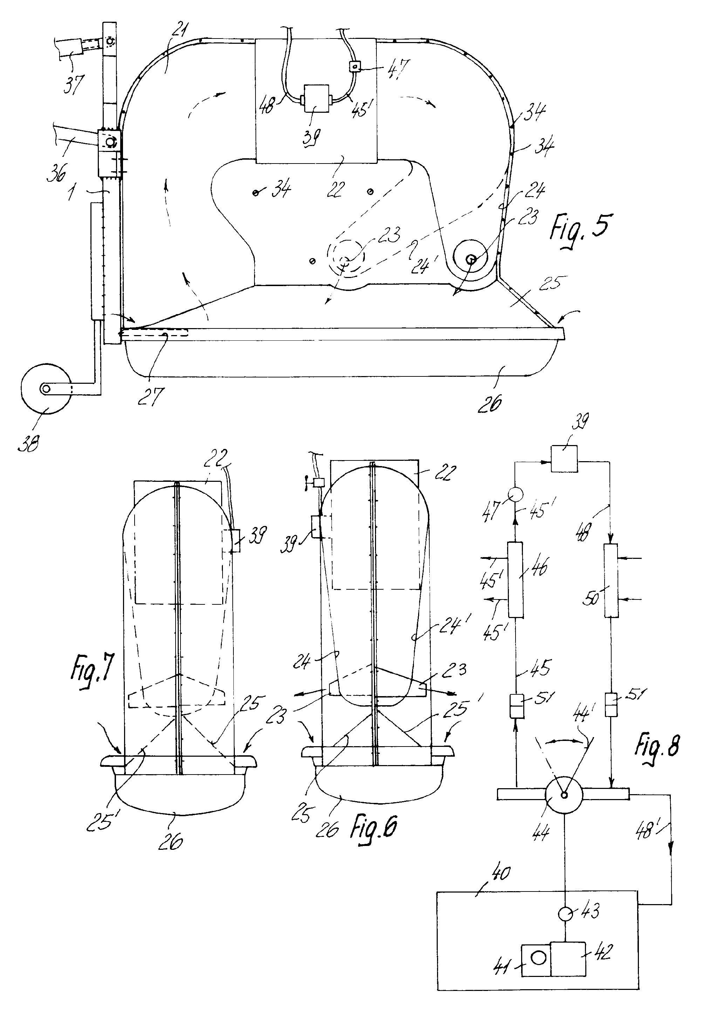

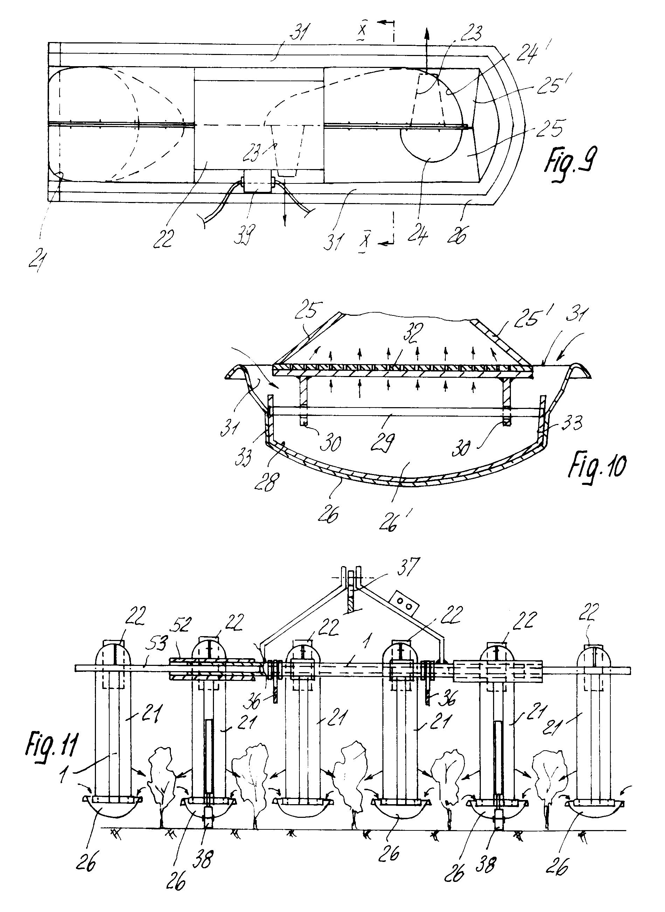

In den Fig. 5 bis 11 sind an Rahmenteilen 1 des Gestells Saugluftkanäle 21 fest angeordnet, die über ein Gebläse 22 mit mit Ausblasdüsen 23 versehene Druckluftkanäle 24, 24' in Verbindung stehen und gemeinsam eine Baueinheit bilden. An den Saugluftkanälen 21 und den Druckluftkanälen 24, 24' schließen sich unten von der Mittellängsachse ausgehend schräg nach unten außen sich erstreckende Wandflächen 25, 25' an, die als obere Abdeckung von Auffangwannen 26 für Kartoffelkäfer dienen. Die Auffangwannen 26 sind auf Streben 27 gestützt und mit einer an einem Formteil 28 gehaltenen Stange 29 in mit den Wandflächen 25, 25' verbundene Halterungen 30 einschiebbar (Fig. 10). Die Auffangwannen 26 sind zur Entleerung nach vorne abziehbar. Die Saugluftkanäle 21 stehen mit den Innenräumen 26' (Fig. 10) der Auffangwannen 26 in Verbindung, wodurch Luft aus den Auffangwannen 26 und über Schlitzungen 31 in den Randbereichen der Auffangwannen 26 in die Saugluftkanäle 21 gelangen kann, um von dort über die Gebläse 22 in die Druckluftkanäle 24, 24' eingebracht zu werden. Zweckmäßig sind die Saugluftkanäle 21 an ihren einströmseitigen Enden durch Siebe 32 oder Gitter übergriffen, die einen unbeabsichtigten Übertritt von Kartoffelkäfern aus den Aufwangwannen 26 in die Saugluftkanäle 21 verhindern. Die Auffangwannen 26 sind im Querschnitt bogenförmig mit im wesentlichen senkrechten Wandabschnitten 33 gestaltet, die von den in den Auffangwannen 26 eingebrachten Kartoffelkäfern nicht erklettert werden können. Bevorzugt können die Ausblasdüsen 23 in Wandungsteilen der Druckluftkanäle 24, 24' drehbar ausgebildet sein, so daß eine Veränderung der Ausblasrichtung möglich ist. Die Saugluftkanäle 21 und die Druckluftkanäle 24, 24' sind durch Formteile aus einem, z.B. plastisch verformbaren Werkstoff gebildet und somit einfach berstellbar. Die schrägen Wandflächen 25, 25' können an den Saugluftkanälen 21 und den Druckluftkanälen 24, 24' mit angeformt sein. Die Saugluftkanäle 21 und die Druckluftkanäle 24, 24' sind beim Ausführungsbeispiel durch Hälften gebildet, die durch Klemmmittel 34 miteinander verbunden sind. Am Rahmenteil 1 greifen Lenker 36, 37 an, die mit dem tragenden Fahrzeug (nicht gezeigt) in Verbindung stehen. Außerdem können am Rahmenteil 1 in ihrer Höhe verstellbare Rollen 38 angeordnet sein, die zur Erleichterung der Handhabung der Vorrichtung beitragen.

Die Gebläse 22 weisen Hydraulikmotoren 39 als Antriebsglieder für die Gebläseräder (nicht gezeigt) auf. Mit 40 ist ein Tank für die Aufnahme des hydraulischen Antriebsmediums, z.B. Öl bezeichnet, der ein mit einer Zapfwelle (nicht gezeigt) betätigbares Getriebe 41 und eine Pumpe 42 aufnimmt. Die Pumpe 42 liefert über ein Druckregelventil 43 an ein Zweiwegeventil 44. Am Zweiwegeventil 44 liegt eine Druckleitung 45 an, die in einen Verteiler 46 ausmündet und über Abzweigungen 45′ und Ölmengenregelventile 47 mit den Hydraulikmotoren 39 in Verbindung steht. An den Hydraulikmotoren 39 liegen Abflußleitungen 48 an, die in einen Sammler 50 ausmünden, der an die Abflußseite des Zweiwegeventils 44 anliegt, das über eine weitere Leitung 48′ mit dem Öltank verbunden ist.

In der gezeigten Stellung des Hebels 44′ des Zweiwegeventils 44 gelangt das Antriebsmedium bei drehender Pumpe 42 über die Leitung 48′ zurück in den Tank 40. In dieser Stellung befinden sich die Hydraulikmotoren 39 in Ruhestellung. Durch Umlegen des Hebels 44′ in die strichpunktierte Stellung, ist der Abfluß von Arbeitsmedium zur Leitung 48′ gesperrt und das Antriebsmedium den Hydraulikmotoren 39 zugeführt, wodurch die Gebläse 22 ihre Arbeitsstellung einnehmen. Mit 51 sind Kupplungen für die Druckleitungen 45 und den Abflußleitungen 48 bezeichnet.

In Fig. 11 nimmt der Rahmenteil 1 mittig zwei Vorrichtungen auf. An auf dem Rahmenteil 1 verschieblich feststellbar aufgebrachten Hülsen 52 sind je eine weitere Vorrichtung angeordnet, während im Rahmenteil 1 verschieblich feststellbar ausgebildete Verlängerungen 53 als Träger von je einer Vorrichtung dienen.

## Patentansprüche

1. Vorrichtung zum Entfernen von Kartoffelkäfern von Kartoffelpflanzen mit mehreren in einem durch eine landwirtschaftliche Zugmaschine getragenem Gestell angeordneten und an der Druckseite eines Gebläses (6) angeschlossenen Druckluftleitungen (2), die seitlich neben den Kartoffelpflanzen quer zur Fahrtrichtung ausblasende Öffnungen (2′) aufweisen und bei der jeder Druckluftleitung (2) auf der jeweils anderen Seite der Kartoffelpflanzen nach unten versetzt eine mit ihrer Längsachse in Fahrrichtung der Zugmaschine weisende Auffangwanne (7) für Kartoffelkäfer zugeordnet ist, die über eine Saugluftleitung (8) mit einem an der Saugseite des Gebläses (6) anliegenden Fangkorb (10) verbunden ist, dadurch gekennzeichnet, daß zwei Druckluftleitungspaare nebeneinander mit in Fahrrichtung der Zugmaschine im Abstand versetzten Druckluftleitungen (2) im Gestell angeordnet sind und die Ausblasöffnungen (2′) der Druckluftleitungen (2) eines jeden Druckluftleitungspaares quer zueinander und zur Fahrrichtung im Abstand versetzt ausgebildet sind.

2. Vorrichtung nach Anspruch 1, dadurch gekennzeichnet, daß die Druckluftleitungspaare durch einen am Gestell angeordneten Plattenwandteil (13) voneinander getrennt und durch weitere Plattenwandteile (14) im Abstand außen begrenzt sind.

3. Vorrichtung nach Anspruch 1, dadurch gekennzeichnet, daß die Auffangwannen (7) einen kreisabschnittsförmigen Querschnitt und stirnseitig verschlossene Endabschnitte aufweisen.

4. Vorrichtung nach Anspruch 3, dadurch gekennzeichnet, daß die Auffangwannen (7) über einen wesentlichen Teilabschnitt ihrer Länge durch ein abgewinkeltes Deckblech (11) im Abstand übergriffen sind, an dem sich nach oben Plattenwandteile (13 bzw. 14) anschließen.

5. Vorrichtung nach Anspruch 1, dadurch gekennzeichnet, daß der Fangkorb (10) übereinander zwei Kammern (10′, 10″) aufweist, die durch eine gelochte Trennwand (18) miteinander in Verbindung stehen und daß die obere Kammer (10′) mit dem Gebläse (6) fest verbunden und über eine Öffnung an der Saugseite des Gebläses anliegt sowie die untere Kammer (10″) ausziehbar trägt und durch ein unterhalb der Trennwand (18) in die untere Kammer (10′) ausmündendes Luftführungsrohr (9) für die Saugluftströmung durchgriffen ist.

6. Vorrichtung zum Entfernen von Kartoffelkäfern von Kartoffelpflanzen mit mehreren in einem durch eine landwirtschaftliche Zugmaschine getragenem Gestell angeordneten und an der Druckseite eines Gebläses (22) angeschlossenen Druckluftkanälen (24, 24′), die seitlich neben den Kartoffelpflanzen quer zur Fahrtrichtung ausblasende Öffnungen (23) aufweisen und bei der jedem Druckluftkanal (24, 24′) auf der jeweils anderen Seite der Kartoffelpflanzen nach unten versetzt eine mit ihrer Längsachse in Fahrrichtung der Zugmaschine weisende Auffangwanne (26) für Kartoffelkäfer zugeordnet ist, die über einem Saugluftkanal (21) mit der Saugseite des Gebläses (22) in Verbindung steht, gekennzeichnet durch eine Anzahl jeweils paarweise im Abstand nebeneinander am Gestell ausgebildeten, zu den Auffangwannen (26) hin permanent offenen Saugluftkanälen (21) und im Abstand hinter den Saugluftkanälen (21) angeordneten, mit seitlichen Ausblasöffnungen (23) versehenen Druckluftkanälen (24, 24′) sowie je ein einen Saugluftkanal (21) und einen zugehörigen Druckluftkanal (24, 24′) verbindendes unabhängiges Druckluftgebläse (22) wobei die Ausblasöffnungen (23) der paarweise einander zugeordneten Druckluftkanälen (24, 24′) quer zueinander und zur Fahrtrichtung im Abstand versetzt angeordnet sind. (Fig. 5)

7. Vorrichtung nach Anspruch 6, dadurch gekennzeichnet, daß die Saugluftkanäle (21) und die zugehörigen Druckluftkanäle (24, 24') durch Formteile gebildet sind und gemeinsam mit den Druckluftgebläsen (22) Baueinheiten bilden, die unten als obere Abdeckung der Auffangwannen (26) dienende, von der Mitte ausgehend zu beiden Seiten schräg von oben nach unten außen sich erstreckende Wandflächen (25, 25') aufweisen und daß zwischen den freien Randkanten von Wandflächen (25, 25') und Auffangwannen (26) Schlitze (31) für den Durchwurf von Kartoffelkäfern und für den Durchtritt von Gebläsezuluft ausgebildet sind.

8. Vorrichtung nach Anspruch 6 und 7, dadurch gekennzeichnet, daß die die Saug- (21) und Druckluftkanäle (24, 24') bildenden Formteile durch in der gemeinsamen Längsmittelebene derselben lösbar fest zusammengefügte Formteilhälften gebildet sind.

9. Vorrichtung nach Anspruch 6, dadurch gekennzeichnet, daß die Zuströmöffnungen der Saugluftkanäle (21) mit den Auffangwannen (26) in Verbindung stehen und daß die Zuströmöffnungen an den den Auffangwannen (26) zugewandten Enden durch als Sperrglieder für die Kartoffelkäfer dienende Gitter (32) übergriffen sind.

10. Vorrichtung nach Anspruch 6, dadurch gekennzeichnet, daß die Ausblasöffnungen (23) durch hinsichtlich Menge, Ausblasrichtung oder Luftstrahlform unveränderbar fest oder veränderbare Ausblasdüsen gebildet sind.

11. Vorrichtung nach Anspruch 6, dadurch gekennzeichnet, daß die Druckluftgebläse (22) durch Hydraulikmotore (39) drehbare Gebläseräder aufweisen und daß die Zufluß- (45, 45') bzw. die Abflußleitungen (48, 48') für das Antriebsmedium der Hydraulikmotoren (39) über einen Verteiler (46) bzw. einen Sammler (50) an einem gemeinsamen Zweiwegeventil (44) anliegen, das über einen Druckregler (43) mit der Druckseite einer Pumpe (42) in Verbindung steht und vermittels der Abflußleitung (48') in den Öltank (40) ausmündet.

12. Vorrichtung nach Anspruch 11, dadurch gekennzeichnet, daß in den Zuflußleitungen (45') zwischen Verteiler (46) und Hydraulikmotoren (39) Mengenregelventile (47) ausgebildet sind.

13. Vorrichtung nach Anspruch 6, dadurch gekennzeichnet, daß der Rahmenteil (1) des Gestells Hülsen (52) und Verlängerungen (53) verschlieblich feststellbar trägt und daß am Rahmenteil (1) und an den Hülsen (52) sowie den Verlängerungen (53) die Saugluftkanäle (21) festgelegt sind.

## Claims

1. Apparatus for removing Colorado beetles from potato plants, comprising a plurality of compressed-air conduits (2) disposed in a framework, which is supported by an agricultural tractor, said conduits communicating with the pressure side of a fan (6) and being provided with openings (2'), which discharge air transversely relative to the direction of travel, laterally adjacent the potato plants, and wherein each compressed-air conduit (2) has associated therewith a collecting trough (7), for collecting Colorado beetles, disposed in a downwardly offset manner on the other respective side of the potato plants, the trough being orientated with its longitudinal axis in the direction of travel of the tractor and being connected to a collecting basket (10), adjacent the suction side of the fan (6), via a suction-air conduit (8), characterised in that two pairs of compressed-air conduits are disposed alongside one another in the framework, with the compressed-air conduits (2) being spaced from one another in an offset manner, when viewed with respect to the direction of travel of the tractor, and the discharge openings (2') in the compressed-air conduits (2) of each pair of compressed-air conduits are provided transversely relative to one another and the direction of travel so as to be spaced from one another in an offset manner.

2. Apparatus according to claim 1, characterised in that the pairs of compressed-air conduits are separated from one another by a panel-like wall portion (13), which is disposed on the framework, and are externally defined by means of additional panel-like wall portions (14) so as to be spaced from one another.

3. Apparatus according to claim 1, characterised in that the collecting troughs (7) have a part-circular cross-section and end portions which are closed at the end faces.

4. Apparatus according to claim 3, characterised in that a bent-over cover plate (11) extends over a substantial portion of the length of the collecting troughs (7) with a spacing therebetween, and panel-like wall portions (13 and 14 respectively) communicate with said cover plate in an upward direction.

5. Apparatus according to claim 1, characterised in that the collecting basket (10) has two chambers (10', 10''), which are situated one above the other and are interconnected by a perforated dividing wall (18), and in that the upper chamber (10') is securely connected to the fan (6) on the suction side of the fan via an opening and supports the lower chamber (10'') in a detachable manner and is traversed by an air-flow pipe (9), which guides the flow of suction-air and discharges into the lower chamber (10'') beneath the dividing wall (18).

6. Apparatus for removing Colorado beetles from potato plants, comprising a plurality of compressed-air ducts (24, 24') disposed in a framework, which is supported by an agricultural tractor, said ducts communicating with the pressure side of a fan (22) and being provided with openings (23), which discharge transversely relative to the direction of travel, laterally adjacent the potato plants, and wherein each compressed-air duct (24, 24') has associated therewith a collecting trough (26), for collecting Colorado beetles, disposed in a downwardly offset manner on the other respective side of the potato plants, the trough being orientated with its longitudinal axis in the direction of travel of the tractor and communicating with the suction side of the fan (22) via a suction-air duct (21), characterised by a number of suction-air ducts (21), which are provided in respective pairs alongside one another on the framework with a spacing therebetween and are permanently open in a direction towards the collecting troughs (26), and by compressed-air ducts (24, 24'), which are disposed behind the suction-air duct ; (21) with a spacing therebetween and are provided with lateral discharge openings (23), as well as by a respective independent compressed-air fan (22) (Fig. 5), which connects a suction-air duct (21) and an associated compressed-air duct (24, 24'), the discharge openings (23) of the compressed-air ducts (24, 24'), which are associated with one another in pairs, being disposed transversely relative to one another and the direction of travel, so as to be spaced from one another in an offset manner.

7. Apparatus according to claim 6, characterised in that the suction-air ducts (21) and the associated compressed-air ducts (24, 24') are formed by shaped parts and, together with the compressed-air fans (22), form structural units which have wall surfaces (25, 25') serving at the lower end as an upper covering for the collector troughs (26) and extending from the centre towards both sides inclinedly from top to bottom externally, and in that slots (31) are provided between the free edges of wall surfaces (25, 25') and collecting troughs (26) for Colorado beetles to pass therethrough and for air to be supplied to the fan.

8. Apparatus according to claim 6 and 7, characterised in that the shaped parts, forming the suction-air ducts (21) and the compressed-air ducts (24, 24'), are formed by shaped part halves which are detachably but firmly joined in the common central longitudinal plane thereof.

9. Apparatus according to claim 6, characterised in that the inlet openings in the suction-air ducts (21) communicate with the collecting troughs (26), and in that grids (32), which serve as barriers for the Colorado beetles, extend over the inlet openings at the ends facing the collecting troughs (26).

10. Apparatus according to claim 6, characterised in that the discharge openings (23) are formed by discharge nozzles which are fixed or are variable, in respect of quantity, discharge direction or configuration of the jet of air.

11. Apparatus according to claim 6, characterised in that the compressed-air fans (22) have fanwheels which are rotatable by means of hydraulic motors (39), and in that the inlet conduits (45, 45') and the outlet conduits (48, 48') for the driving medium of the hydraulic motors (39) abut, via a distributor (46) and an accumulator (50) respectively, against a common two-way acting valve (44) which communicates with the pressure side of a pump (42) via a pressure regulator (43) and discharges into the oil tank (40) by means of the outlet conduit (48').

12. Apparatus according to claim 11, characterised in that volume control valves (47) are provided in the inlet conduits (45') between distributor (46) and hydraulic motors (39).

13. Apparatus according to claim 6, characterised in that the frame portion (1) of the framework carries sleeves (52) and extensions (53) in a displaceably securable manner, and in that the suction-air ducts (21) are secured on the frame portion (1) and on the sleeves (52), as well as on the extensions (53).

**Revendications**

1. Dispositif pour éliminer les doryphores de plants de pommes de terre, comportant plusieurs conduits d'air comprimé (2) raccordés au côté de refoulement d'une soufflante (6), et agencés dans un bâti porté par un tracteur agricole, conduits qui présentent des orifices (2') soufflant transversalement à la direction de course, latéralement à côté des plants de pommes de terre, et dans lequel, à chaque conduit d'air comprimé (2), est associée, sur chaque autre côté des plants de pommes de terre de façon décalée vers le bas, une cuve de collecte (7) pour les doryphores, dont l'axe longitudinal est orienté dans la direction de course du tracteur, cuve qui est reliée, par l'intermédiaire d'un conduit d'air d'aspiration (8), à un panier de collecte (10) se trouvant du côté d'aspiration de la soufflante (6), caractérisé en ce que deux paires de conduits d'air comprimé sont agencées dans le bâti l'une à côté de l'autre, avec des conduits d'air comprimé (2) décalés dans la direction de course du tracteur, et les orifices de soufflage (2') des conduits d'air comprimé (2) de chaque paire de conduits sont agencés, de façon décalée, transversalement l'un par rapport à J'autre et à la direction de course.

2. Dispositif selon la revendication 1, caractérisé en ce que les paires de conduits d'air comprimé sont séparées l'une de l'autre par une partie de paroi (13) agencée sur le bâti et sont limitées extérieurement par d'autres parties de paroi (14).

3. Dispositif selon la revendication 1, caractérisé en ce que les cuves de collecte (7) présentent une section transversale en forme d'arc de cercle et des tronçons d'extrémité frontalement fermés.

4. Dispositif selon la revendication 3, caractérisé en ce que les cuves de collecte (7) sont recouvertes, sur une partie importante de leur longueur, par une coiffe coudée (11), à laquelle se raccordent, vers le haut, les parties de paroi (13 ou 14).

5. Dispositif selon la revendication 1, caractérisé en ce que le panier de collecte (10) présente, l'une au-dessus de l'autre, deux chambres (10', 10''), qui sont reliées l'une à l'autre par une paroi de séparation perforée (18), et en ce que la chambre supérieure (10') est solidaire de la soufflante (6) et est adjacente, par l'intermédiaire d'un orifice, au côté d'aspiration de la soufflante et porte, de façon amovible, la chambre inférieure (10''), et est traversée par un tube de guidage d'air (9) pour le courant d'air d'aspiration, débouchant dans la chambre inférieure (10'') au-dessous de la paroi de séparation (18).

6. Dispositif pour éliminer les doryphores de plants de pommes de terre, comportant plusieurs canaux d'air comprimé (24, 24') raccordés au côté de refoulement d'une soufflante (22), et agencés dans un bâti porté par un tracteur agricole, canaux qui présentent des orifices (23) soufflant transversalement à la direction de course, latéralement à côté des plants de pommes de terre, et dans lequel, à chaque canal d'air comprimé (24, 24'), est associée, sur chaque autre coté des plants de pommes de terre de façon décalée vers le bas, une cuve de collecte (26) pour les doryphores, dont l'axe longitudinal est orienté dans la direction de course du tracteur, cuve qui est reliée, par l'intermédiaire d'un canal d'air d'aspiration (21), au côté d'aspiration de la soufflante (22), caractérisé par une pluralité de canaux d'air d'aspiration (21) ouverts de façon permanente vers les cuves de collecte (26), et agencés sur le bâti à distance l'un à côté de l'autre, à chaque fois par paire, et de canaux d'air comprimé (24, 24') munis d'orifices de soufflages latéraux (23) et agencés, à distance, derrière les canaux d'air d'aspiration (21), ainsi que par une soufflante indépendante (22) reliant un canal d'air d'aspiration (21) et un canal correspondant d'air comprimé (24, 24'), les orifices de soufflage (23) des canaux d'air comprimé (24, 24') associés l'un à l'autre par paire étant agencés, de façon décalée, transversalement l'un par rapport à l'autre et à la direction de course (figure 5).

7. Dispositif selon la revendication 6, caractérisé en ce que les canaux d'air d'aspiration (21) et les canaux d'air comprimé correspondants (24, 24') sont formés par des pièces moulées et forment, avec les soufflantes (22), des unités modulaires qui, en bas, présentent des parois (25, 25') s'étendant vers l'extérieur, du haut vers le bas, de façon inclinée vers les deux côtés à partir du centre, et servant de recouvrement supérieur des cuves de collecte (26), et en ce que, entre les bords libres de parois (25, 25') et des cuves de collecte (26), sont prévues des fentes (31) pour le passage des doryphores et pour le passage de l'air d'alimentation des soufflantes.

8. Dispositif selon les revendications 6 et 7, caractérisé en ce que les pièces moulées formant les canaux d'air d'aspiration (21) et les canaux d'air comprimé (24, 24') sont formées par des moitiés de pièces moulées solidarisées de façon amovible dans leur plan médian longitudinal commun.

9. Dispositif selon la revendication 6, caractérisé en ce que les orifices d'alimentation des canaux d'air d'aspiration (21) sont reliés aux cuves de collecte (26), et en ce que les orifices d'alimentation sont recouverts, aux extrémités proches des cuves de collecte (26), par des grillages (32) servant d'organes d'arrêt pour les doryphores.

10. Dispositif selon la revendication 6, caractérisé en ce que les orifices de soufflage (23) sont formés par des buses de soufflage modifiables ou non en ce qui concerne le débit, la direction de soufflage ou la forme du courant d'air.

11. Dispositif selon la revendication 6, caractérisé en ce que les soufflantes (22) présentent des roues entraînables en rotation par des moteurs hydrauliques (39), et en ce que les conduits d'admission (45, 45') ou les conduits d'écoulement (48, 48') pour le fluide d'entraînement des moteurs hydrauliques (39) sont reliés à une soupape deux-voies (44) commune, par l'intermédiaire d'un distributeur (46) ou d'un collecteur (50), soupape qui est reliée au côté de refoulement d'une pompe (42), par l'intermédiaire d'un régulateur de pression (43), et débouche dans le réservoir d'huile (40), par l'intermédiaire du conduit d'écoulement (48').

12. Dispositif selon la revendication 11, caractérisé en ce que des soupapes de réglage de débit (47) sont agencées, dans les conduits d'admission (45'), entre les distributeurs (46) et les moteurs hydrauliques (39).

13. Dispositif selon la revendication 6, caractérisé en ce que la partie (1) du bâti porte des douilles (52) et des prolongements (53) déplaçables et fixables, et en ce que les canaux d'air d'aspiration (21) sont fixés à la partie (1) du bâti et aux douilles (52) ainsi qu'aux prolongements (53).

Fig. 1

Fig. 2

Fig.3

Fig.4

Fig. 5

Fig. 7

Fig. 6

Fig. 8

Fig. 9

Fig. 10

Fig. 11